# EUROPÄISCHE PATENTANMELDUNG

(11) **EP 1 434 124 A2**
(43) Veröffentlichungstag der Anmeldung: **30.06.2004**
(21) Anmeldenummer: 03018173.9
(22) Anmeldetag: 08.08.2003
(51) Int. Cl.: G06F 3/033

(54) **Ermüdungsfreies Computereingabegerät**

(30) Priorität: 09.08.2002 EP 02017878; 19.08.2002 EP 02018574
(71) Anmelder: Jehnke, Baldur, Erich, 22415 Hamburg (DE)
(72) Erfinder: Jehnke, Baldur, Erich, 22415 Hamburg (DE)

(57) **Zusammenfassung**

Die heutigen Computereingabegeräte wie z.B. die Maus sind physiologisch mangelhaft, denn sie führen zu statischen Belastungen - im Falle der Maus ist das Handgelenk betroffen - die zu gesundheitlichen Schäden führen können. Aber auch andere z.B. 3-dimensionale Eingabegeräte , die z.B. die Stellung der Hand/des Arms im Raum erkennen/erfassen, führen zu einer Ermüdung (und ggf. gesundheitlichen Schädigung) durch die dabei stets auch vorhandene statische Belastung der Armmuskulatur/Gelenke.

Unsere Patentidee ist, bei der Nutzung der Freiheitsgrade der Armbewegung zur Computersteuerung, gleichzeitig den Arm in seinen Bewegungen abzustützen; dadurch sind Gelenke und Muskulatur von den besonders schädlichen und schwer zu ertragenden statischen Belastungen befreit. Da man jetzt keine Tischplatte mehr benötigt, kann man das Gerät überall anmontieren, z.B. an einen Sessel, sodaß das Gerät praktisch eine bewegliche Armlehne darstellt, mit der man Computer steuert. Man kann das Gerät aber auch als Mobilgerät bauen und es überall hin mitnehmen. Die nach dieser Patentidee hergestellten Geräte besitzen somit bisher nicht erreichte ergonomisch/physiologisch optimale Eigenschaften und bieten dabei eine erweiterte Vielfalt an Computersteuerungsmöglichkeiten.

## Beschreibung

Computereingabegeräte wie z.B. die sog. Maus sind heute weit verbreitet. Aber es wird immer mehr bekannt, daß das Arbeiten damit schwere Belastung von Arm und Hand, insbesondere des Handgelenks bedeutet und zu erheblichen gesundheitlichen Schäden führt, die allein in den USA im Jahre 1995 Kosten von 7 Milliarden Dollar verursachten (Computerzeitung vom 26.03.98). Man versucht durch immer bessere ergonomische Ausgestaltung der sog. Maus diese Gesundheitsbelastung zu verringern; aber das ist nicht der geeignete Weg, um das Problem wirklich zu lösen.

Der Fehler bei all diesen Bemühungen ist, daß man sich offensichtlich über einen einfachen Zusammenhang nicht im klaren ist, nämlich : daß an Aktivitäten der Hand stets auch der Arm beteiligt ist und daß man deshalb das Gesamtsystem Arm+Hand betrachten muß und für Hand- und Armbewegungen eine Gesamtlösung finden muß. Die Nichtberücksichtigung des Arms führt dann dazu, daß das Gesamtsystem Arm-Hand sich in einer ungünstigen Stellung befindet: der Unterarm liegt einfach auf dem Tisch auf und das Handgelenk muß nun die Kräfte aufnehmen, die auftreten zwischen der Hand, mit der man die Maus kleinräumig bewegt bzw. betätigt und dem auf dem Tisch aufliegenden Unterarm. Falls man den Arm von der Tischplatte abhebt, um ihn mit der sog. Maus großräumig mitzuführen, muß das Handgelenk das Armgewicht zum Teil mit abstützen. Dies alles sind verspannte Haltungen bzw. statische Belastungen, mit denen Muskeln und Gelenke am weigsten gut zurechtkommen.

Wir lösen das Problem erfindungsgemäß dadurch, daß wir ein Computereingabegerät bauen, das den Arm bei seinen Bewegungen abstützt (und so das Gesamtsystem Arm-Hand entlastet) und gleichzeitig die Freiheitsgrade der Armbewegungen zur Computersteuerung nutzt

Wir können das Gerät so bauen, daß es dem Aufgelegten und abgestützten Unterarm Bewegungen in mehreren Dimensionen erlaubt und sich dabei leicht mit den Armbewegungen mitbewegt. Die Koordinatenwerte der Bewegungen registrieren wir über geeignete Meßwertgeber und führen sie als Steuerdaten dem Computer zu. Durch das Abstützen des aufgelegten Arms ist die schädliche statische Belastung der Armmuskulatur und Gelenke aufgehoben; das besonders wenig belastbare Handgelenk wird hierbei noch überhaupt nicht beansprucht.

Der Arm kann dann sehr feindosiert Bewegungen in mehreren Dimensionen ausführen ; denn es ist keineswegs so, daß damit nur grobe Bewegungen möglich wären, im Gegenteil! Jeder gute Klavierpädagoge weiß das : fein dosiertes Anschlagen der Tasten macht man aus dem Arm heraus (Schulter- und Armgelenk, ggf. auch Mitbewegung des Körpers) und nicht aus dem Handgelenk.

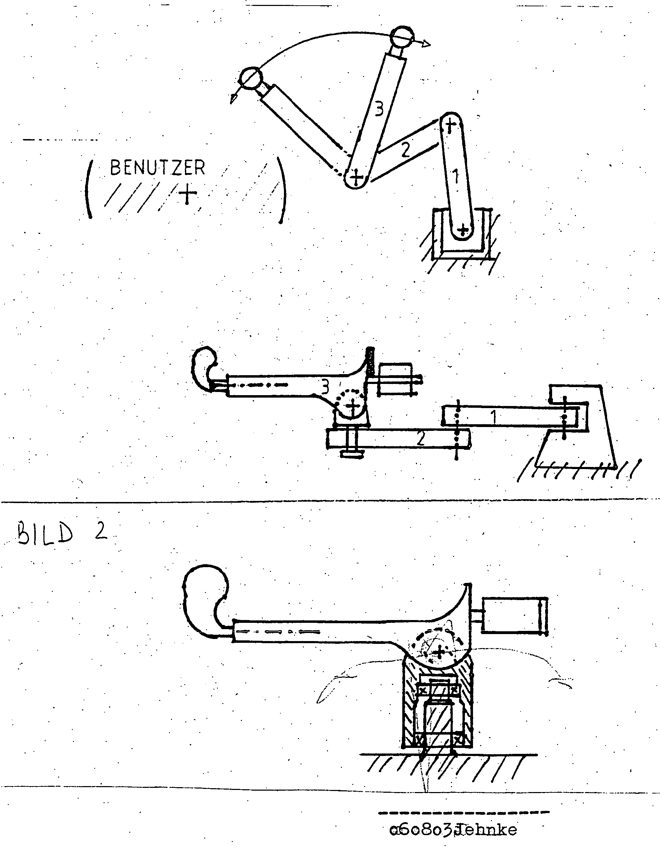

Eine spezielle Ausführungsform besteht aus drei drehbar gelagerten Gerätearmen (Bild 1). Diese Konstruktion gewährleistet, daß der Gerätearm(3), auf dem der Unterarm aufliegt, völlig frei jede Lage in den Ebene einnehmen kann und so jeder Unterarmbewegung, die in der Ebene stattfindet (aus Schulter- und Armgelenk heraus) frei folgt und sogar ganz leicht, wenn man die Reibung in den Drehgelenken niedrig hält z.B. durch Verwendung von Wälzlagern. Das vordere Ende von Gerätearm(3), etwa Position der Hand, kann so jede x-y-Position in der Ebene ereichen, und dabei kann der Arm stets in einer für den Benutzer bequemen Stellung bleiben. Man könnte nun am vorderen Ende von Gerätearm(3) eine Rollkugel (sog.Maus) anbringen und sie auf der Tischoberfläche rollen lassen, um so - wie üblich - die Koordinetenlage zu erfassen. Aber das ist bei unserem Gerät gar nicht nötig; denn man kann die Position auch über die Bewegungen der Gerätearme selbst bestimmen, z.B. durch Winkelgeber an den Drehpunkten; dies hat den Vorteil, daß die sehr geringen Reibungskräfte nicht durch die Rollkugel erhöht werden(und das ergäbe eine Vervielfachung der Reibung) und deshalb kann man, besonders bei großräumigen Bewegungen, leichter und schneller und damit produktiver arbeiten als mit der so. Maus; mit diesem Vorteil gegenüber der sog.Maus werben z.B. die Hersteller von Grafiktabletts für ihr Produkt.

Den Teil des Geräts, auf dem der Unterarm aufliegt, kann man günstigerweise etwas schalenförmig gestalten, damit die Mitführung mit der Armbewegung zuverlässig erfolgt. Man kann günstigerweise für die Hand einen Griff vorsehen, so daß sie einerseits eine bequeme und definierte Lage einnehmen kann und andererseits die Mitführung des Geräts mit der Armbewegung nochmals verbessert wird. Diesen Griff kann man mit weiteren Eingabefunktionen ausstatten; der Unterschied zur sog. Maus oder zum Steuerknüppel besteht darin, daß die Hand bzw. das Handgelenk nicht mehr den Arm mit abstützen muß; und auch die Armmuskulatur muß nicht mehr die zur Aufrechterhaltung der Armstellung erforderliche, vor allem statische Kraft aufbringen.

Der entspannt auf dem Gerät liegende Unterarm hat auf natürlich leichte Weise zwei weitere Bewegungsmöglichkeiten, die zur Koordinateneingabe genutzt werden können : 1. Ein Schwenken senkrecht zur x-y-Ebene der bisherigen Bewgung (aus Schulter- und Armgelenk, ggf. Mitbewegung des Körpers); die Drehachse liegt dabei günstigerweise in der Nähe des Armgelenks. 2. Eine Drehbewegung des aufgelegten Unterarms um seine Längsachse(mit Elle und Speiche); diese Drehbewegung ist besonders leicht in eine Koordinatenangabe umsetzbar, wenn wir den Handgriff(wie in den Abb. gezeigt) drehbar lagern. Man erreicht mit dem hier beschriebenen Gerät nicht nur ergonomisch hervorragende Werte, sondern bekommt auch eine größere Anzahl von Funktionen als mit anderen Konstruktionen. Ein weiterer Vorteil des Geräts ist, daß es keine Tischfläche benötigt, wie es beim Grafiktablett oder der sog.Maus der Fall ist. Deshalb kann es an einen Stuhl oder Sessel angebaut werden, natürlich in Höhe und Position individuell einstellbar; es stellt dann praktisch eine den Armbewegungen folgende Armlehne dar. So kann man den Computer sogar bequem vom Sessel aus steuern.

Eine einfachere Ausführungsform (Bild 2) enthält nur einen Gerätearm, der dreh- und schwenkbar ist; das sind zwei Dimensionen, ersetzen also die x-y-Bewegung der Maus. Dazu können alle weiteren Funktionen wie in Ausführung 1 zusätzlich eingebaut werden, z.B. kann die Drehung des Arms um Elle und Speiche als dritte Dimension genommen werden. Da man den Drehpunkt ebenso wie den Schwerpunkt am günstigsten etwa in die Nähe des Armgelenks legt, wird man das Gewicht des Arms günstigerweise durch eine Gegenmasse aus z.B. Blei austarieren, die man zur individuellen Austarierung verschiebbar macht. das typ. erforderliche Drehmoment liegt bei ca. 300 N.cm, das ist z.B. ein Bleizylinder ⌀ 70 mm, Länge 70 mm, dessen Schwerpunkt 100 mm vom Drehpunkt entfernt liegt.

Man muß nicht alle Freiheitsgrade der Bewegung, die man in das Gerät eingebaut hat, zu Steuerungszwecken nutzen, sondern kann sie für Ausgleichsbewegungen verwenden.

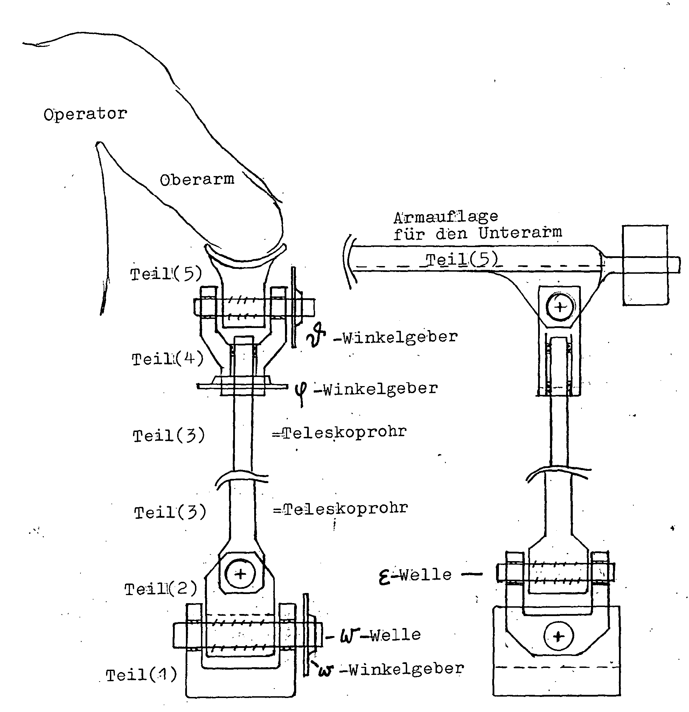

Eine spezielle Ausführungsform, die das erläutert, besteht aus (siehe Bild 3) :
→ einem Teil(1), das entweder an ein Möbel (Sessel, Schreibtisch) angeschraubt oder sonstwie an ihm befestigt ist oder als Fuß ausgebildet ist, der auf den Boden (oder auch auf ein Möbel) aufgesetzt werden kann - damit ist man dann mobil und kann damit, im Sitzen oder Stehen, an jedem beliebigen Ort einen Computer steuern.
→ einer ω -Wblle, drehbar gelagert (parallel zum Fußboden) in Teil(1).
→ einem Teil(2), das an der ω -Welle befestigt ist; die Drehbewegung der ω-Welle liefert über den ω-Winkelgeber die **ω**-Koordinatensteuersignale.
→ einem ε-Welle, drehbar gelagert in Teil(2), im rechten Winkel zur ω -Welle und in ihrer mittleren Stellung etwa parallel zum Fußboden. An dieser ε-Welle werden keine Steuersignale abgegriffen, so daß eine Arm- bzw. Körperbewegung in der entsprechenden Richtung keinen Einfluß auf das gesteuerte Geschehen hat. Damit ist diese Bewgungsrichtung freigegeben für Willkür/Ausgleichsbewegungen des Arms bzw. Körpers, die insbesondere stattfinden bei der ω-steuernden Vor- und Rückwärtsbewegung, die über das Teleskoprohr die ω-Welle (und damit den ω-Winkelgeber) dreht.
→ einem Teleskoprohr = Teil(3), das an der ε-Welle befestigt ist.
→ einem Teil(4), drehbar gelagert auf dem Teleskoprohr; seine Drehbewegung liefert über den ϕ-Winkelgeber die ϕ-Koordinatensteuerungssignale.
→ einem Teil(5), das ist die Armauflage, auf der der Unterarm aufliegt, sie ist drehbar gelagert auf Teil( 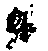 ); diese Drehbewegung liefert über den ϑ-Winkelgeber die ϑ-Koordinatensteuersignale.

## Patentansprüche

1. Computereingabegerät **dadurch gekennzeichnet**, däß es den Arm in seinen Bewegungen abstützt und gleichzeitig die Freiheitsgrade der Armbewegung zur Computersteuerung nutzt.

2. Computereingabegerät nach Anspruch 1) **dadurch gekennzeichnet, daß** es die Bewgung aus dem Schultergelenk und/oder aus dem Armgelenk und/oder die Drehung des Unterarms um Elle und Speiche und/oder die Schwenkbewegung des Unterarms zur Computersteuerung nutzt.

3. Computereingabegerät nach Anspruch 1) und 2) **dadurch gekennzeichnet, daß** es einen Arm enthält, der als Auflage für den Unterarm dient und der dreh- und schwenkbar befestigt ist, wobei das Gewicht des Unterarms durch ein Ausgleichsgewicht ganz oder teilweise austariert sein kann, und der mit einem Griff für die Hand versehen ist, der mit weiteren Eingabefunktionen ausgestattet sein kann und zusätzlich drehbar gelagert um eine Achse, so daß die Drehbewegung des Unterarms um Elle + Speiche zur Computersteuerung zusätzlich genutzt werden kann.

4. Computereingabegerät nach Anspruch 3) **dadurch gekennzeichnet, daß** dieser Arm an einer festen Auflage befestigt ist.

5. Computereingabegerät nach Anspruch 3) **dadurch gekennzeichnet, daß** dieser Arm an einem weiteren Arm befestigt ist, der Wiederum drehbar gelagert an einem dritten Arm befestigt ist, der seinerseits drehbar gelagert an einer festen Auflage befestigt ist, sodaß der Unterarm frei in der Ebene jede Stellung einnehmen kann.

6. Computereingabegerät nach Anspruch 1) **dadurch gekennzeichnet, daß** gewisse Freiheitsgrade der Armbewegung nicht zur Steuerung des Computers genutzt werden, sondern für Willkü- und Ausgleichsbewegungen des Arms oder Körpers freibleiben.
